# EUROPÄISCHE PATENTSCHRIFT

(11) **EP 2 542 604 B1**
(45) Veröffentlichungstag und Bekanntmachung des Hinweises auf die Patenterteilung: **25.06.2014**
(21) Anmeldenummer: 11706813.0
(22) Anmeldetag: 03.03.2011
(51) Int. Cl.: C09J 7/02, C09J 175/04, C08G 18/12, C08G 18/66, C08G 18/75

(54) **IONISCHE GRUPPEN AUFWEISENDER SCHMELZKLEBSTOFF**
HOT-MELT ADHESIVE COMPRISING IONIC GROUPS
ADHÉSIF FUSIBLE CONTENANT DES GROUPES IONIQUES

(30) Priorität: 05.03.2010 DE 102010002622
(43) Veröffentlichungstag der Anmeldung: 09.01.2013
(73) Patentinhaber: Henkel AG & Co. KGaA, 40589 Düsseldorf (DE)
(72) Erfinder: MÖLLER, Thomas, 40593 Düsseldorf (DE); LACK, Melanie, 40221 Düsseldorf (DE); KRLEJOVA, Andrea, 40210 Düsseldorf (DE); DAVIS, Riju, 40593 Düsseldorf (DE)
(86) Internationale Anmeldenummer: PCT/EP2011/053192
(87) Internationale Veröffentlichungsnummer: WO 2011/107546

(56) Entgegenhaltungen:
- EP-A1- 1 262 502
- DE-A1- 19 742 217
- DE-A1-102007 015 801

## Beschreibung

Die Erfindung betrifft strahlenvernetzbare Schmelzklebstoffe mit guter Haftung auf Basis von reaktiven Polyurethanen, die beispielsweise zum Verkleben von Folien auf verschiedenen Substraten eingesetzt werden können.

Strahlenhärtende Klebstoffe sind allgemein bekannt. Dabei werden beispielsweise fließfähige, häufig dünnviskose Klebstoffe durch radikalische oder kationische Polymerisation vernetzt und es entstehen Haftklebstoffe oder feste verklebte Schichten. Die Polymere müssen den Substratoberflächen angepasst werden, um eine gute Haftung sicherzustellen.

Ein Anwendungsgebiet sind Klebstoffe zum Verkleben von Kunststoffetiketten auf Verpackungen, beispielsweise Flaschen oder Dosen. Um eine gute Haftung auf dem Substrat sicherzustellen werden häufig hülsenförmige Schrumpfetiketten eingesetzt. Maschinen und Verfahren sind bekannt, solche Rund-um-Etiketten auf rotationssymmetrische Gegenstände aufzubringen. Dabei werden durch Verkleben diese Etiketten hergestellt. Dabei werden meist dünne Klebstoffschichten afgetragen.

Strahlenhärtende Schmelzklebstoffe sind beispielsweise aus der DE 4041753 A1 oder der WO 02/34858 bekannt. Darin werden zweistufig polymerisierbare Beschichtungsmassen auf Urethanbasis beschrieben, die durch einen Gehalt an UV-polymerisierbaren Acrylatgruppen im Rahmen einer ersten Härtungsstufe verfestigt werden, und in einer nachfolgenden zweiten Stufe über Isocyanatgruppen eine irreversible Vernetzung erfolgt. Zur Viskositätsabsenkung werden dem Klebstoff als Reaktivverdünner monofunktionelle Acrylate zugegeben. Isocyanathaltige Klebstoffe können jedoch gesundheitlich bedenklich sein.

In der EP 1262502 wird ein lineares Polymeres beschrieben, dass ein Polyesterrückgrat aufweist, an einem Kettenende eine ungesättigte Doppelbindung, am anderen Ende einen Alkohol anreagiert enthält. Es werden dort keine Klebstoff beschrieben, die anreagiert an das Basispolymere die Initiatorgruppen tragen.

In der DE 102007015801 werden Klebstoffe beschreiben, die als Klebstoff zum Verkleben von Etiketten eingesetzt werden können. Dabei werden auch strahlenvernetzbare Prepolymere, die auf Basis von Polyether- oder Polyester-Polyurethanpre-polymeren hergestellt werden. Es werden nur übliche Polyole beschrieben, ein gezielter Aufbau von anionische oder kationische Gruppen aufweisenden Polymerketten wird nicht beschrieben.

UV-vernetzende Klebstoffe sind auch aus der WO 2005/105857 bekannt. Dort werden Umsetzungsprodukte beschrieben aus einem Polyesterdiol, einem Polyetherpolyol zusammen mit einem OH-funktionellen Acrylat, die mit Polyisocyanaten umgesetzt werden. Diese Prepolymere werden dann mit monomeren Acrylaten und Initiatoren gemischt und als reaktiver Klebstoff eingesetzt.

Die bekannten strahlenvernetzbaren Klebstoffe haben aber den Nachteil, dass die Haftung zu Kunststoffsubstraten verbessert werden kann. Wenn regelmäßig unterschiedliche Umwelteinflüsse auf die verklebte Stelle einwirken, beispielsweise bei einer Exposition an der Tageswitterung zugänglichen Stellen, kann die Verklebung noch verbessert werden. Außerdem ist es für Etikettenverklebung üblich, den Klebstoff nur in dünner Schicht aufzutragen. Eine Vernetzung auch in dicker Schicht mit guter Klebkraft und elastischer Verklebung ist häufig nicht zu erzielen.

Es ist daher Aufgabe der vorliegenden Erfindung, einen strahlenhärtbaren Klebstoff, wobei die Verklebung nach Vernetzung eine dauerhafte Belastung auch unter wechselnder thermischer Beanspruchung ermöglicht und der sich durch eine gute Haftung zu Kunststoffoberflächen auszeichnet. Außerdem soll der Klebstoff auch in dickerer Schicht aufzutragen und zu vernetzen sein.

Die Aufgabe wird gelöst durch die Bereitstellung eines durch Strahlung vernetzenden Schmelzklebstoffs gemäß den Patentansprüchen. Dabei wird ein durch Strahlung vernetzbarer Schmelzklebstoff bereitgestellt, der mehr als 30 Gew.-% bezogen auf den Schmelzklebstoff mindestens eines Polyurethanpolymeren enthält, das mindestens eine durch Strahlung polymerisierbare reaktive Gruppe aufweist, hergestellt durch Umsetzung a) eines reaktiven PU-Prepolymeren mit zwei oder drei NCO-Gruppen pro Molekül sowie mindestens einer Carboxylgruppe oder einer tertiäre Aminogruppe, hergestellt aus - i) einem Gemisch aus mindestens einem di- oder trifunktionellen Polyol ausgewählt aus Polyetherpolyolen oder Polyesterpolyolen mit einer Molmasse zwischen 200 bis 5000 g/mol zusammen mit einer Diolkomponente, die zusätzlich noch eine Carboxylgruppe oder eine tertiäre Aminogruppe aufweist, umgesetzt mit - ii) einem Überschuss mindestens eines Di- oder Triisocyanats mit einem Molekulargewicht unterhalb von 500 g/mol, b) 20 bis 98 Mol-% mindestens einer niedermolekularen Verbindung (B) enthaltend eine radikalisch polymerisierbaren Doppelbindung und eine mit einer NCO-Gruppe reagierende Gruppe, und c) 0 bis 50 Mol-% mindestens einer Verbindung (C), die mindestens eine gegen NCO-Gruppen reaktive Gruppe aufweist, aber keine unter radikalischen Bedingungen polymerisierbare Gruppe, mit einem Molekulargewicht von 32 bis 5000 g/mol und d) 2 bis 50 Mol-% mindestens eines radikalischen Photoinitiators (D), der eine primäre oder sekundäre OH-Gruppe aufweist, wobei die Angeben auf die NCO-Gruppen des PU-Prepolymeren bezogen sind und die Summe aus B, C, D 100 Mol-% ergeben soll, sowie ggf. weitere Hilfsstoffe.

Ein weiterer Gegenstand der Erfindung ist die Verwendung solcher Schmelzklebstoffe mit strahlenvernetzbaren funktionellen Gruppen zum Verkleben von Folien auf mineralischen Untergründen. Ein weiterer Gegenstand der Erfindung ist die Verwendung solcher Schmelzklebstoffe zur Verklebung auf Kunststoffoberflächen.

Der erfindungsgemäße Schmelzklebstoff besteht im Wesentlichen aus einem PU-Polymer, das endständig strahlenvernetzbare reaktive Doppelbindungen aufweist. Weiterhin enthält das PU-Polymer chemisch gebundene Initiatoren. Das Polymergerüst muss außerdem ionische Gruppen oder in ionische Gruppen überführbare Gruppen enthalten. In einer weiteren Ausführungsform enthält das PU-Prepolymer zusätzlich freie, nicht vernetzbare Polymerkettenenden. Das PU-Polymer wird aus einem NCO-reaktiven Polyurethanprepolymer hergestellt werden.

Das Polyurethanprepolymer A) als Basis für die weiteren Umsetzungen wird durch Umsetzung von Diolbausteinen und/oder Triolbausteinen mit Di- oder Tri-Isocyanatverbindungen hergestellt. Dabei werden die Mengenverhältnisse so gewählt, dass endständig NCO-funktionalisierte Prepolymere erhalten werden. Als weiterer Baustein sollen Diolverbindungen enthalten sein, die zusätzlich noch eine tertiäre Aminogruppe oder eine Carbon- oder Sulfonsäuregruppe aufweisen. Insbesondere sollen die PU-Prepolymere linear sein, d.h. überwiegend aus Diolen und Diisocyanaten hergestellt werden. Eine zusätzliche Verwendung von geringen Anteilen an trifunktionellen Polyolen oder Isocyanaten ist möglich. Die bei der Synthese der Prepolymeren einsetzbaren Polyole und Polyisocyanate sind dem Fachmann bekannt.

Es handelt sich dabei um die für Klebstoffanwendung bekannten monomeren Di- oder Triisocyanate. Beispiele für geeignete monomere Polyisocyanate sind 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-tri-methylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, Trimethylhexamethylendiisocyanat, 1,4-Diisocyanatobutan, 1,12-Diisocyanatododecan, Dimerfettsäurediisocyanat. Besonders geeignet sind aliphatische Isocyanate wie Hexamethylendiisocynat, Undecan-, Dodecamethylendiisocyanat, 2,2,4-Trimethylhexan-2,3,3-Trimethyl-hexamethylen, 1,3- oder 1,4-Cyclohexandiisocynat-, 1,3- oder 1,4-Tetramethylxyloldiisocynat, lsophorondiisocynat, 4,4-Dicyclohexylmethan-, Lysinesterdiisocyanat oder Tetramethylxylylendiisocyanat (TMXDI).

Als trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Zur Herstellung von Trimeren geeignete Isocyanate sind die bereits oben genannten Diisocyanate, wobei die Trimerisierungsprodukte von HDI, TMXDI oder IPDI besonders bevorzugt sind.

In einer besonderen Ausführungsform können auch Polyisocyanate mit Uretdion-, Isocyanurat-, Allophanat-, Biuret-, Iminooxathizindion- und/oder Oxadiazintrionstruktur enthalten sein. Bevorzugt sind PU-Prepolymere auf Basis von aliphatischen oder cycloaliphatischen Polyisocyanaten oder von Oligomeren auf Basis von HDI, IPDI und/oder 2,4'- oder 4,4'-Diisocyanatodicyclohexylmethan.

Als di-funktionelle oder tri-funktionelle Polyole können die bekannten Polyole mit einer Molekulargewicht bis 20000 g/mol ausgewählt werden. Sie sollen beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Bevorzugt sind Polyole, die endständige OH-Gruppen aufweisen.

Im Rahmen der vorliegenden Erfindung als Polyol zur Herstellung des PU-Prepolymeren geeignete Polyester können durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen. Als Polycarbonsäure sind solche mit einem aliphatischen, cycloaliphatischen, aromatischen oder heterocyclischen Grundkörper geeignet. Gegebenenfalls können anstatt der freien Carbonsäuren auch deren Säureanhydride oder deren Ester mit C₁₋₅-Monoalkoholen zur Polykondensation eingesetzt werden.

Als Diole zur Umsetzung mit den Polycarbonsäuren können eine Vielzahl von Polyolen eingesetzt werden. Beispielsweise sind aliphatische Polyole mit 2 bis 4 primären oder sekundären OH-Gruppen pro Molekül und 2 bis 20 C-Atomen geeignet. Ebenfalls eingesetzt werden können anteilsweise höherfunktionelle Alkohole. Weitere Polyesterole können auf Basis von Polycaprolactonen hergestellt werden. Verfahren zur Herstellung solcher Polyesterpolyole sind dem Fachmann bekannt und diese Produkte sind kommerziell erhältlich. Eine besondere Ausführungsform der Erfindung verwendet bei der Synthese des PU-Prepolymeren Polyesterdiole, die zusätzlich noch Carboxylgruppen enthalten. Solche Polyester können beispielsweise durch die Verwendung von geringen Anteilen an Tricarbonsäuren bei der Synthese erhalten werden.

Weiterhin können als Polyol Polyetherpolyole eingesetzt werden. Polyetherpolyole werden vorzugsweise durch Umsetzung von niedermolekularen Polyolen mit Alkylenoxiden erhalten. Die Alkylenoxide weisen vorzugsweise zwei bis vier C-Atome auf. Geeignet sind beispielsweise die Umsetzungsprodukte von Ethylenglykol, Propylenglykol oder den isomeren Butandiolen mit Ethylenoxid, Propylenoxid oder Butylenoxid. Es sind auch Umsetzungsprodukte polyfunktioneller Alkohole wie Glycerin, Trimethylolethan oder Trimethylolpropan, Pentaerythrit oder Zuckeralkohole mit den genannten Alkylenoxiden zu Polyetherpolyolen geeignet. Es kann sich um statistische Polymere oder um Blockcopolymere handeln. Besonders geeignet sind aus den genannten Umsetzungen erhältliche Polyetherpolyole mit einem Molekulargewicht von etwa 200 bis etwa 20.000 g/mol, vorzugsweise von etwa 400 bis etwa 6.000 g/mol.

Weitere geeignete Polyole können auf Basis von Polyacrylaten hergestellt sein. Es handelt sich dabei um durch Polymerisation von Poly(meth)acrylestern hergestellte Polymere. Gegebenenfalls können auch andere copolymerisierbare Monomere zu geringen Anteilen enthalten sein. Die erfindungsgemäßen Acrylate sollen zwei OH-Gruppen aufweisen. Diese können bevorzugt endständig in dem Polymer vorhanden sein. Solche OH-funktionellen Poly(meth)acrylate sind dem Fachmann bekannt.

Eine weitere geeignete Klasse von Polyolen sind OH-funktionalisierte Polyolefine. Polyolefine sind dem Fachmann bekannt und können in vielen Molekularmassen erzeugt werden. Solche Polyolefine auf Basis von Ethylen-, Propylen- oder höherkettigen α-Olefinen als Homo- oder Copolymer können entweder durch Copolymerisation von funktionelle Gruppen enthaltenden Monomeren oder durch Pfropfreaktionen funktionalisiert werden. Eine weitere Möglichkeit besteht darin, dass diese Basispolymere nachträglich beispielsweise durch Oxidation mit OH-funktionellen Gruppen versehen werden. In einer anderen Ausführungsform weisen die Polyolefine zusätzlich COOH-Gruppen auf. Diese können beispielsweise durch Copolymeriation oder durch Pfropfen mit Maleinsäureanhydrid in die polymere einreagiert werden.

Die erfindungsgemäß zur Herstellung der PU-Prepolymere geeigneten Polyole sollen ein Molekulargewicht zwischen 200 bis 20000 g/mol aufweisen. Insbesondere soll das Molekulargewicht kleiner 12000 g/mol sein. Im Falle von Polyetherpolyolen soll das Molekulargewicht, insbesondere zwischen 400 und 12000 g/mol. Im Falle von Polyesterpolyolen soll das Molekulargewicht bevorzugt zwischen 600 und 2500 g/mol (zahlenmittleres Molekulargewicht, M_{N}, wie durch GPC bestimmbar, Polystyrolstandard). Insbesondere geeignet sind lineare Polyetherpolyole, Polyesterpolyole oder Gemische davon.

Erfindungsgemäß ist es notwendig, dass zusammen mit den oben erwähnten Polyolen weitere niedermolekulare Verbindungen zwei mit Isocyanaten reagierende Gruppen eingesetzt werden, die zusätzlich mindestens eine ionische Gruppe oder eine in ionische Gruppen überführbare Gruppe enthalten. Es kann sich dabei um Verbindungen handeln, die ein Molekulargewicht von ca. 90 bis 1000 g/mol aufweisen, insbesondere unter 500g/mol. Bevorzugt sollen zwei OH-Gruppen enthalten sein. Eine weitere Ausführungsform enthält zwei NRH-Gruppen. In weniger bevorzugten Ausführungsformen können auch SH-Gruppen enthalten sein. Es ist vorteilhaft, wenn es sich um primäre, beispielsweise OH-Gruppen handelt.

Als ionische Gruppe oder in eine ionische Gruppe überführbare Gruppe sind bevorzugt tert. Aminogruppen oder Carboxyl-, Phosphonsäure-, Phosphorsäure- oder Sulfonsäure-gruppen geeignet. Es können eins bis drei Gruppen vorliegen, bevorzugt eine Gruppe, insbesondere eine Carboxylgruppe. Beispiele für solche Verbindungen sind Hydroxyalkancarbonsäuren, wie Hydroxyessigsäure, 2- oder 3-Hydroxypropansäure, Mandelsäure, 2-, 3- oder 4-Hydroxybutansäure, Hydroxyisobutansäure, Hydroxypentansäure, Hydroxyisopentansäure, Hydroxyhexansäure, Hydroxydodecansäure, Hydroxypentadecansäure, Hydroxyhexadecansäure oder Rizinussäure. Weiterhin möglich sind Dihydroxyalkancarbonsaeuren, wie Dimethylolpropionsaeure (DMPA). DMPA ist besonders bevorzugt. Weiterhin möglich sind Carbonsäuren mit zwei phenolischen OH-Gruppen, wie Dihydroxybenzoesäure oder Dihydroxydi-carbonsäuren, wie Weinsäure. Weiterhin möglich sind Sulfonsäuren, wie 3-Aminopropansulfonsäure, N-3-(2-Aminoethyl)-aminopropyl-sulfonsäure, 2,5-Dihydroxy-benzolsulfonsäure, 4,5-Dihydroxy-1,3-benzoldisulfonsäure oder deren Salze, Phosphonsäuren, wie 3-Aminopropanphosphonsäure, 1-Hydroxy-ethylidendiphosphonsäure oder N-(2-Hydroxyethyl)-iminobis-(methylphosphonsäure). Weiterhin möglich sind Alkyldialkanolamine, wie Alkyldimethanolamine, Alkyldiethanolamine, Alkyldipropanolamine, Beispiele sind N-Methyldiethanolamin, N-Methyldipropanolamin, N-(2,3-Dihydroxypropyl)-Piperidin. Bevorzugt werden N-Alkyl-Dialkanolamine eingesetzt oder insbesondere Dihydroxycarbonsäuren. Es liegt nur ein Typ einer ionischen Gruppe vor, bevorzugt wird nur eine Verbindung umgesetzt. Durch die Auswahl der Verbindungen und die Reaktionsbedingungen wird sichergestellt, dass im Wesentlichen nur die OH-Gruppen oder NHR-Gruppen mit den Isocyanaten reagieren.

Die Menge der zusätzlichen ionischen Gruppen wird so gewählt, dass im erhaltenen Prepolymeren 0,05 bis 1 mmol/g, bevorzugt 0,07 bis 0,7 mmol/g, besonders bevorzugt 0,1 bis 0,5 mmol/g Säure- oder tert. Aminogruppen enthalten sind. Eine Ausführungsform der Erfindung arbeitet so, dass bei der Synthese der Prepolymere die Verbindungen enthaltend ionische Gruppen im Gemisch mit den Polyolen umgesetzt werden. Eine andere Ausführungsform stellt zuerst Prepolymere her, die anschließend in einer weiteren Reaktionsstufe mit den difunktionellen Verbindungen mit zusätzlicher Säure- oder Aminogruppe umgesetzt und kettenverlängert werden.

Bevorzugt werden Prepolymere aus den erwähnten Polyisocyanaten und Polyolen auf Basis von Polyether- und/oder Polyesterdiolen hergestellt. Insbesondere sollen Gemische beider Polyoltypen bei der Synthese eingesetzt werden. Eine Ausführungsform enthält tertiäre Aminogruppen in der Kette, eine andere bevorzugte Ausführungsform Carboxylgruppen. Die entstehenden reaktiven PU-Prepolymere A) sind NCO-reaktiv und tragen 3 oder bevorzugt 2 Isocyanatgruppen.

Die Umsetzung der Polyole mit den Polyisocyanaten kann beispielsweise in Gegenwart von Lösemitteln erfolgen, bevorzugt wird jedoch in lösemittelfreier Form gearbeitet. Zur Beschleunigung der Reaktion wird üblicherweise die Temperatur erhöht, beispielsweise zwischen 30 bis 130°C, bevorzugt 35 bis 100°C, insbesondere von 40 bis 80°C. Gegebenenfalls können zur Beschleunigung der Reaktion in der Polyurethanchemie übliche Katalysatoren zum Reaktionsgemisch zugesetzt werden. Bevorzugt ist die Zugabe von Dibutylzinndilaurat, Dimethylzinndineodecanoat oder Diazabicyclooctan (DABCO). Dabei soll die Menge von etwa 0,001 Gew.-% bis etwa 0,1 Gew.-% des Prepolymeren betragen.

In einer weiteren Reaktion werden die NCO-Gruppen anteilsweise mit Verbindungen B) umgesetzt, die eine funktionelle Gruppe tragen, die mit Isocyanaten reagieren kann und als weitere funktionelle Gruppe eine durch radikalische Polymerisation vernetzbare Doppelbindung aufweist. Diese haben üblicherweise ein Molekulargewicht von weniger als 1500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Beispiele für solche Carbonsäuren sind Acrylsäuren, Methacrylsäure, Crotonsäuren, Itaconsäure, Fumarsäure- und Maleinsäure-halbester. Entsprechende OH-Gruppen tragende Ester von (Meth)acrylsäure sind beispielsweise 2-Hydroxyethyl(meth)acrylamid, 2-Hydroxyethyl(meth)-acrylat, 2-Hydroxypropyl(meth)acrylat, 3-Hydroxypropyl(meth)acrylat, 3-Hydroxypropyl(meth)acrylamid, N-Hydroxyethyl(meth)acrylamid, Umsetzungsprodukte von Glycidylethern oder -estern mit Acryl- oder Methacrylsäure, beispielsweise Umsetzungsprodukte von Versaticsäureglycidylestern mit Acryl- oder Methacrylsäure, Addukte von Ethylenoxid oder Propylenoxid an (Meth)acrylsäure, Umsetzungsprodukte von Hydroxylacrylaten mit ε-Caprolacton oder partielle Umesterungsprodukte von Poylalkoholen, wie Pentaerythrit, Glycerin oder Trimethylolpropan, mit (Meth)acrylsäure.

Die Menge der OH-funktionellen Verbindung mit radikalisch polymerisierbaren Doppelbindungen wird so gewählt, dass 20 bis 98 Mol-% insbesondere 22 bis 90 Mol-%, bevorzugt 25 bis 85 Mol-% bezogen auf die NCO-Gruppen des PU-Prepolymeren eingesetzt werden. Eine bevorzugte Ausführungsform verwendet ein Gemisch von Methacrylat- und Acrylatestern, wobei insbesondere der Anteil an Acrylaten mindestens 20 Mol-%, insbesondere mindestens 25 Mol-% der Mischung ausmacht.

Weiterhin ist es möglich, dass das NCO-reaktive PU-Prepolymer mit mindestens einer Verbindung C) umgesetzt wird, die mindestens eine mit Isocyanaten reaktive Gruppe aufweist, darüber hinaus keine weitere unter radikalischen Bedingungen poylmerisierbare Gruppe besitzt. Beispiele für solche mit Isocyanate reaktive Gruppen sind OH-, SH- oder NHR-Gruppen. Diese Verbindungen C) sollen ein Molekulargewicht zwischen 32 und 10000 g/mol aufweisen, insbesondere zwischen 40 und 4000 g/mol.

Geeignete monofunktionelle Verbindungen sind beispielsweise Alkohole mit 1 bis 36 C-Atomen, wie beispielsweise Methanol, Ethanol, Propanol und höhere Homologe, sowie die entsprechenden Thioverbindungen, beispielsweise mit einem Molekulargewicht zwischen 40 bis 1000 g/mol. Weiterhin können auch monohydroxy- oder monoamino-funktionelle Polymere eingesetzt werden mit einem Molekulargewicht kleiner 10000 g/mol, insbesondere von 1000 und 4000 g/mol. Auch Gemische von niedermolekularen und polymeren Bausteinen sind möglich. Insbesondere soll die funktionelle Gruppe eine OH-Gruppe sein.

Auch höherfunktionelle Verbindungen sind geeignet. Beispiele dafür sind Diole, Triole oder Polyole, bevorzugt Diole oder Triole, insbesondere Diole. Geeignete Verbindungen sind beispielsweise Polyole mit 2 bis 44 C-Atomen, beispielsweise Ethylenglycol, Propandiol, Butandiol und höhere Homologe, sowie die entsprechenden Thioverbindungen. Die Mengen dieser Polyole werden in dieser Ausführungsform so gewählt, dass ein geeigneter molarer Überschuss dieser reaktiven Funktionalität in Bezug auf die NCO-Gruppen vorliegt. Es kann eine Kettenverlängerung der NCO-Prepolymere erfolgen, bevorzugt soll jedoch nur eine OH-Gruppe umgesetzt werden, und man erhält freie OH-Gruppen. Dabei soll das Molekulargewicht dieser höherfunktionellen Verbindung C) bis 10000 g/mol betragen insbesondere von 200 bis zu 3000 g/mol. Es können auch SH oder NH-Polymere eingesetzt werden. Die Menge der Komponente C) soll 0 bis 50 Mol-% betragen, insbesondere 2 bis 35 Mol-%.

Als weiterer notwendiger Bestandteil anreagiert an das Prepolymer wird ein Photoinitiator (D) eingesetzt, der bei Bestrahlung mit Licht einer Wellenlänge von etwa 215 nm bis etwa 480 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren geeignet, die mit dem erfindungsgemäßen Schmelzklebstoff kompatibel sind.

Beispielsweise sind dies alle Norrish-Type I fragmentierenden und Norrish -Typ II Substanzen. Beispiele hierfür sind Photoinitiatoren der Kayacure -Reihe (Hersteller Nippon Kayaku), Trigonal 14 (Hersteller: Akzo), Photoinitiatoren der Irgacure^{®}-, Darocure^{®}- Reihe (Hersteller: Ciba-Geigy), Speedcure^{®}-Reihe (Hersteller Lambson), Esacure-Reihe (Hersteller: Fratelli Lamberti) oder Fi-4 (Hersteller Eastman ).

Aus diesen Initiatoren werden erfindungsgemäß solche ausgewählt, die mindestens eine mit NCO-Gruppen reaktive OH-Gruppe besitzt, beispielsweise eine primäre oder sekundäre OH-Gruppe, insbesondere eine aliphatische OH-Gruppe. Dabei soll diese OH-Gruppe mit einem Teil der NCO-Gruppen des PU-Prepolymeren reagieren und gebunden am Polymeren vorliegen. Die Menge der reaktiven Initiatoren soll mindestens 1 Mol% bezogen auf die NCO-Gruppen des PU-Prepolymeren betragen, insbesondere zwischen 4 bis 50 Mol-%, bevorzugt zwischen10 bis 30 Mol-%.

Der ausgewählte Initiator wird im Rahmen der Polymersynthese zugesetzt, wobei dann die Summe der Komponenten B, C, D 100 Mol-% bezogen auf die NCO-Gruppen des PU-Prepolymeren ergeben soll. Die Umsetzungsverfahren zur Umsetzung der reaktiven PU-Prepolymere sind dem Fachmann bekannt. Dabei kann eine Reaktion im Gemisch stattfinden, oder die Bestandteile werden nacheinander umgesetzt. Nach der Umsetzung erhält man statistisch funktionalisierte PU-Polymere.

Das PU-Polymer soll ein Molekulargewicht kleiner 200.000 g/mol aufweisen, insbesondere zwischen 1000 und 100.000 g/mol, bevorzugt zwischen 2000 und 50.000 g/mol, insbesondere unter 20.000 g/mol. Das PU-Polymer soll im wesentlichen frei von Isocyanatgruppen sein, d.h. nach der Umsetzungsreaktion sollen nur noch Spuren von nicht umgesetzten NCO-Gruppen enthalten sein. Die Menge soll unter 0,1 % (bezogen auf das Prepolymer) betragen, besonders bevorzugt kleiner 0,05 %.

Zusätzlich kann der Schmelzklebstoff noch Anteile an Reaktivverdünnern enthalten. Als Reaktivverdünner sind besonders solche Verbindungen geeignet, die eine oder mehrere reaktive durch Bestrahlung mit UV-Licht oder mit Elektronenstrahlen polymerisierbare funktionelle Gruppe aufweisen.

Insbesondere sind di- oder höherfunktionelle Acrylat- oder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.
Ebenfalls geeignete Verbindungen sind beispielsweise die Acrylsäure- oder Methacrylsäureester der aromatischen, cycloaliphatischen, aliphatischen, linearen oder verzweigten C₄₋₂₀-Monoalkohole oder von entsprechenden Etheralkoholen. Beispiele für solche Verbindungen sind 2-Ethylhexylacrylat, Octyl-/Decylacrylat, Isobornylacrylat, 3-Methoxybutylacrylat, 2-Phenoxyethylacrylat, Benzylacrylat oder 2-Methoxypropylacrylat, Neopentylglykoldi(meth)acrylat, 1,6-Hexandioldi(meth)acrylat, Trimethylolpropantri(meth)acrylat, Pentaerythrittetra(meth)acrylat, sowie (Meth)-acrylatester des Sorbits und anderer Zuckeralkohole. Diese (Meth)acrylatester von aliphatischen oder cycloaliphatischen Diolen können ggf. mit einem aliphatischen Ester oder einem Alkylenoxid modifiziert werden. Die durch einen aliphatischen Ester modifizierten Acrylate umfassen beispielsweise Neopentylglykolhydroxypivalatdi-(meth)acrylat, Caprolacton-modifizierte Neopentylglykolhydroxypivalatdi(meth)-acrylate und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi (meth)acrylate, Ethylenoxid-modifizierte 1,6-Hexandioldi(meth)acrylate oder Propylenoxid-modifizierte 1,6-Hexandioldi(meth)-acrylate, Neopentylglykol-modifizierte (Meth)acrylate, Trimethylolpropandi(meth)-acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri- und tetra(meth)acrylat, Ditrimethylolpropantetra(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra-(meth)acrylat, Tris[(meth)acryloxyethyl] isocyanurat, Caprolacton-modifizierte Tris[(meth)acryloxyethyl]isocyanurate oder Trimethylolpropantetra(meth)acrylat oder Gemische aus zwei oder mehr davon.

Als Reaktivverdünner sind insbesondere (Meth)acrylester geeignet, die drei bis sechs (Meth)acrylgruppen enthalten. Die Menge kann 0 bis 10 Gew.-% betragen, insbesondere mehr als 0,1 Gew.-%, bevorzugt 2 bis 5 Gew.-%. Diese Substanzen erhöhen die Kohäsion dieses erfindungsgemäßen Schmelzklebstoffes.

Zu den im Rahmen der vorliegenden Erfindung in dem Schmelzklebstoff zusätzlich einsetzbaren Hilfs- und Zusatzstoffen zählen beispielsweise Weichmacher, Stabilisatoren, Antioxidantien, Haftvermittler, Harze, Polymere, Farbstoffe oder Füllstoffe.

In einer Ausführungsform enthält der erfindungsgemäße Schmelzklebstoff mindestens ein klebrigmachendes Harz. Das Harz bewirkt eine zusätzliche Klebrigkeit. Es können grundsätzlich alle Harze eingesetzt werden, die mit dem Schmelzklebstoff verträglich sind, d.h. ein weitgehend homogenes Gemisch bilden.

Es handelt sich dabei insbesondere um Harze, die einen Erweichungspunkt von 70 bis 140 °C (Ring-Ball-Methode, DIN 52011) besitzen. Es sind dieses beispielsweise aromatische, aliphatische oder cycloaliphatische Kohlenwasserstoff-Harze, sowie modifizierte oder hydrierte Versionen davon. Beispiele dafür sind aliphatische oder alicyclische Petroleum-Kohlenwasserstoffharze und deren hydrierte Derivate. Weitere, im Rahmen der Erfindung einsetzbare Harze sind z.B. Hydroabietylalkohol und seine Ester, insbesondere Ester mit aromatischen Carbonsäuren wie Terephthalsäure und Phthalsäure; modifizierte Naturharze wie Harzsäuren aus Balsamharz, Tallharz oder Wurzelharz, z.B. teil- oder vollverseiftes Balsamharz; Alkylester von gegebenenfalls teilhydriertem Kolophonium mit niedrigen Erweichungspunkten wie z.B. Methyl-, Diethylenglykol-, Glycerin- und Pentaerythrit-Ester; Terpen-Harze, insbesondere Terpolymere oder Copolymere des Terpens, wie Styrol-Terpene, α-Methyl-Styrol-Terpene, Phenol-modifizierte Terpenharze sowie hydrierte Derivate davon; Acrylsäure-Copolymerisate, vorzugsweise Styrol-Acrylsäure-Copolymere und Harze auf Basis funktioneller Kohlenwasserstoffharze. Die Harze besitzen im Allgemeinen ein niedriges Molekulargewicht. Sie können chemisch inert sein, oder sie tragen noch funktionelle Gruppen, wie Doppelbindungen oder OH-Gruppen. Das Harz kann in einer Menge von 0 bis 50 Gew.-% eingesetzt werden, bevorzugt von 10 bis 40 Gew.-% bezogen auf den Schmelzklebstoff.

Die erfindungsgemäßen Klebstoffe können gegebenenfalls auch noch Anteile an Haftvermittlern enthalten. Es handelt sich dabei beispielsweise um Silanverbindungen, die hydrolysierbare Reste aufweisen, beispielsweise Alkoxy-, Acetoxy-Halogen-Gruppen, sowie einen organischen Substituenten, der auch eine weitere funktionelle Gruppe tragen kann. Beispiele dafür sind hydroxyfunktionelle, (meth)acryloxyfunktionelle, mercaptofunktionelle, aminofunktionelle oder epoxyfunktionelle Silane, wie 3-Mercaptopropyltrimethoxysilan, 3-Mercaptopropyltrimethoxysilan, 3-Acryloxypropyltrialkoxysilan, 3-Methacryloxypropyltrialkoxysilan, 3-Aminopropyltrialkoxysilan, N-(2-Aminoethyl)-3-aminopropyltrialkoxysilan, oder deren Alkyldialkoxy- Analoga, insbesondere Methoxy oder Ethoxygruppen.

Als Weichmacher werden beispielsweise medizinische Weißöle, naphtenische Mineralöle, paraffinischen Kohlenwasserstofföle, Phthalate, Adipate, Polypropylen-, Polybuten-, Polyisopren-Oligomere, hydrierte Polyisopren- und/oder Polybutadien-Oligomere, Benzoatester, pflanzliche oder tierische Öle und deren Derivate eingesetzt. Als einsetzbaren Stabilisatoren oder Antioxidantien können Phenole, sterisch gehinderte Phenole hohen Molekulargewichts, polyfunktionelle Phenole, schwefel- und phosphorhaltige Phenole oder Amine ausgewählt werden. Als Pigmente können beispielsweise Titandioxid, Talkum, Ton und dergleichen ausgewählt werden. Gegebenenfalls können dem Schmelzklebstoff Wachse zugegeben werden. Die Menge ist dabei so bemessen, dass die Adhäsion nicht negativ beeinflusst wird. Das Wachs kann natürlichen oder synthetischen Ursprungs sein.

Ferner können zusätzlich Photosensibilisatoren eingesetzt werden. Durch den Einsatz von Photosensibilisatoren ist es möglich, die Absorption von Photopolymerisationsinitiatoren zu kürzeren und/oder zu längeren Wellenlängen auszuweiten und auf diese Weise die Vernetzung zu beschleunigen. Die von ihnen absorbierte Strahlung bestimmter Wellenlänge wird als Energie auf den Photopolymerisationsinitiator übertragen. Im Rahmen der Erfindung einsetzbare Photosensibilisatoren sind z.B. Acetophenon, Thioxanthane, Benzophenon und Fluoreszein und deren Derivate.

Gegebenenfalls können in den erfindungsgemäßen Klebstoffen Anteile an thermoplastischen Polymeren vorliegen, beispielsweise kann es sich um Polymere mit einem Molekulargewicht größer 1000 g/mol handeln. Diese enthalten keine reaktiven Gruppen, in einer anderen Ausführungsform können diese Polymere vinylisch ungesättigte Gruppen aufweisen. Es sind beispielsweise Polymere aus der Gruppe der Polyacrylate, Polymethacrylate und deren Copolymere, Ethylen-n-butylacrylat-Copolymere, Ethylen-(Meth)Acrylsäure-Copolymere, Ethylen-Vinylacetat-Copolymere, Polyvinyl-methylether, Polyvinylpyrrolidon, Polyethyloxazoline, Polyamide, Stärke oder Celluloseester, amorphe Polyolefine, beispielsweise Polypropylen-Homopolymere, Propylen-Buten-Copolymere, Propylen-Hexen-Copolymere und insbesondere amorphe Poly-alpha-Olefin-Copolymere (APAO), die durch Metallocen-Katalyse hergestellt werden, enthalten.

Diese weiteren polymeren Bestandteile können von 0 bis 30 Gew.-%, insbesondere 2 bis 25 Gew.-% im erfindungsgemäßen Schmelzklebstoff enthalten sein. Das Molekulargewicht beträgt im Allgemeinen über 1000, bevorzugt über 10000 g/mol. Die Auswahl und die Eigenschaften der thermoplastischen Polymere sind dem Fachmann bekannt. Insgesamt soll die Summe der Klebstoffbestandteile 100% ergeben.

Die oben genannten Schmelzklebstoffe sind lösemittelfrei und können auf bekannte Art hergestellt werden. Sie sind zu der erfindungsgemäßen Einsatz zum Verkleben von Kunststoffsubstraten besonders geeignet.

Bevorzugte Ausführungsformen umfassen eine Auswahl von zusätzlichen Bestandteilen, wie
- Schmelzklebstoffe, wobei der Schmelzklebstoff im Wesentlichen frei von Isocyanatgruppen ist,
- Schmelzklebstoffe, wobei N-Methyl- oder N-Ethyl- Diethanolamin oder Dimethylolpropionsäure oder Weinsäure einreagiert werden,
- Schmelzklebstoffe, wobei zusätzlich Polymere auf Basis von Polyestern, Polyethern, Polyamiden oder Polyolefinen mit vinylischen Gruppen enthalten sind, die keine Urethangruppen enthalten,
- Schmelzklebstoffe, wobei zusätzlich Hilfsstoffe, wie Harze, Stabilisatoren, Weichmacher sowie weitere Photoinitiatoren enthalten sind,
- Schmelzklebstoffe, wobei der Schmelzklebstoff frei von Pigmenten oder Füllstoffen ist,
- Schmelzklebstoffe, wobei die Viskosität bei Applikationstemperatur von 2000 bis 20000 mPas beträgt, insbesondere gemessen bei 130°C.
- Schmelzklebstoffe, die zusätzlich 0,1 bis 10 Gew.-% von drei bis sechs-funktionellen (Meth)acrylsäureestern enthalten. Diese Ausführungsform können einzeln oder auch kombiniert vorliegen.

Die erfindungsgemäßen strahlenvernetzbaren Schmelzklebstoffe sind insbesondere zum Verkleben von folienförmigen Substraten mit Substraten aus Glas, Metall, Gewebe, Keramik oder Kunststoff geeignet. Folienförmige Substrate können dabei Etiketten, Folien, Kunststoffbänder, Gewebeflächen oder ähnliche Materialien umfassen. Die Trägermaterialien der Foliensubstrate sind üblicherweise dünn, flexibel und gegebenenfalls auch elastisch. Es kann sich dabei beispielsweise um Folien aus thermoplastischen Kunststoffen wie Polyethylen, Polypropylen, Polystyrol, Polyvinylchlorid oder Zellglas handeln.

Bei der Verwendung der erfindungsgemäß geeigneten Schmelzklebstoffe werden diese in geschmolzenem Zustand auf das Trägermaterial aufgetragen, im folgenden Verfahrensschritt durch Strahlung vernetzt. Für eine problemlose Verarbeitung sollte die erfindungsgemäßen Schmelzklebstoffe vor der Bestrahlung eine entsprechend niedrige Viskosität aufweisen, bei 130 °C soll sie üblicherweise 500 mPas bis 100000 mPas betragen, insbesondere bis 5000 mPas (gemessen mit einem Brookfield Viskosimeter DV 2+ , Spindel 27, bei angegebener Temperatur, nach EN ISO 2555).

Die erfindungsgemäßen Schmelzklebstoffe weisen die erforderliche niedrige Viskosität bei niedrigen Verarbeitungstemperaturen auf, wie sie beispielsweise bei der Verwendung auf temperaturempfindlichen Substraten gewünscht ist. Die Verarbeitungstemperaturen liegen im Bereich von 50 °C bis 150 °C, bevorzugt im Bereich von 70 °C bis 130 °C. Die Verarbeitung erfolgt auf an sich bekannten Maschinen.

Nach der Applikation des erfindungsgemäßen Schmelzklebstoffes wird der erfindungsgemäße Schmelzklebstoff mit einer ausreichenden UV- oder Elektronenstrahl-Dosis bestrahlt, damit die Klebstoffschicht vernetzt und eine ausreichende mechanische Stabilität und Kohäsion aufweist. Dabei soll die UV-Dosis bezogen auf die UV-C-Anteil größer 10 mJ/cm², insbesondere größer als 20 mJ/cm², bevorzugt größer 30 mJ/cm² betragen.

Durch die Menge der nicht-reaktiven Kettenenden kann die Klebrigkeit beeinflusst werden. Durch die Menge der ungesättigten Gruppen wird die Kohäsion des vernetzten Klebstoffes beeinflusst. Das kann durch Zusatz von mehrfunktionellen Reaktivverdünnern verstärkt werden.

Eine bevorzugte Verwendungsform der erfindungsgemäßen Schmelzklebstoffe ist die Beschichtung von selbstklebenden Folien, Bändern oder Etiketten aus Kunststofffolien mit einer Klebstoffschicht. Dabei werden Bänder oder Folien, beispielsweise auf Basis von Polyolefinen oder Polyestern, mit dem erfindungsgemäß geeigneten Schmelzklebstoff beschichtet und dieser durch Strahlung vernetzt. Es wird in diesem Fall durch Auswahl eines entsprechenden Klebstoffs eine dauerhaft haftklebrige Schicht erhalten. Danach können diese Materialien konfektioniert werden. Auf diese Weise können dann dauerklebrige Folien, Etiketten und Bänder hergestellt werden. Die so erhaltenen selbstklebenden Oberflächen können ggf. durch antiadhäsiv beschichtete Trägerfolien abgedeckt werden, die bei einer späteren Verwendung entfernt wird.

Eine andere Ausführungsform setzt die erfindungsgemäßen Klebstoff zum Verkleben von Folien in der Bauindustrie ein. Dabei ist es notwendig, die Klebstoffschicht in höheren Schichtstärken aufzutragen. Diese kann von 50 bis 500 µm betragen. Auch in dieser Dicke ist eine Vernetzung durch die Strahlung festzustellen. Es werden selbstklebende Beschichtungen mit hoher Klebkraft erhalten. Beispielsweise können so selbstklebende Folien zur Dachbeschichtung hergestellt werden.

Bevorzugte Ausführungsformen der Anwendungsverfahren umfassen die
- Verwendung solcher Schmelzklebstoffe, zum Verkleben von Folien aus PE, PP, PVC, Polyester oder Polyamid,
- Verwendung der erfindungsgemäßen Schmelzklebstoffe zum Verkleben auf Substraten aus unpolaren Kunststoffen, wie Polyethylen, Polypropylen, Teflon,
- einseitig beschichtete Foliensubstrate, die eine haftklebrige Schicht aus einem der erfindungsgemäßen Klebstoffe aufweisen,
- Verwendung zum überlappenden Verkleben von Foliensubstraten, wobei diese an der Klebefläche an beiden zugewandten Substratseiten mit einer Klebstoffschicht versehen sind.

Die erfindungsgemäßen lösemittelfreien Schmelzklebstoffe ergeben nach der Vernetzung eine selbstklebende Klebstoffschicht. Dies ist lagerstabil und kann später verklebt werden. Dabei weist sie eine hohe Klebkraft auf. Das entstandene Netzwerk ist gleichmäßig aufgebaut und verbesserte Adhäsion und Kohäsion dabei über einen weiten Temperaturbereich gegeben. Weiterhin ist es vorteilhaft, dass durch die chemisch anreagierten Initiatoren diese im Klebstoff nicht migrieren oder sich separieren können. Die Klebstoffe können auch in dicker Schicht eingesetzt werden und ergeben eine kohäsiv stabile Verklebung.

Der Gegenstand der Erfindung soll anhand der folgenden Beispiele näher erläutert werden.

### Beispiel 1 (Vergleich):

App: 1I-Vierhalskolben mit Rührer; Thermofühler; N2-Überleitung; höhenverstellbares Ölbad; Vakuumpumpe mit stickstoffgefüllter Kühlfalle.

### Ansatz:

| | | |
|---|---|---|
| 1.) PPG 1000 | 200,00 g | Polypropylenglykol (OHZ=101) |
| 2.) PEG 600 | 50,5 g | Polyethylenglykol (OHZ = 50) |
| 3.) Irganox B225 | 1,0 g | |
| 4.) IPDI | 77,6 g | (Isophorondiisocyanat) |
| 5.) DBTL | 0,03 g | Sn Katalysator |
| 6.) BHT | 0,3 g | |
| 7.) 2-Hydroxyethylacrylat | 11,3 g | |
| 8.) aliphatischer Alkohol | 15,5 g | (Molekulargewicht 268 g/mol, einwertig) |
| 9.) Irgacure 2959 | 8,7 g | |

### Versuchsdurchführung:

1, 2, 3 wurden vorgelegt und auf ca. 120°C aufgeheizt. Anschließend wurde Vakuum angelegt und bei < 10 mbar 1 h entwässert und anschließend mit Stickstoff belüftet. Die Temperatur wurde auf 99°C gesenkt, 4 zugegeben und dann 10 min homogenisiert. Anschließend wurde 5 zugegeben. Die Temperatur erhöht sich. Nach 45 min wurde die NCO-Zahl bestimmt (ca, 2,47%). Danach wurde mit trockener Luft belüftet.

6 wird zugegeben, homogenisiert, dann 7 und bei 100 °C gerührt. Es wurden 8 und 9 zugesetzt und nach 1 Std. NCO-Wert und Viskosität bestimmt.

Schmelzviskosität 500 mPas bei 120°C; nach 48 stündiger Lagerung bei 120°C betrug die Viskosität 460 mPas; NCO = 0,025%.
Peel-Test ( ASTM D 1876 ): 2,3 N

### Beispiel 2:

### App.: wie in Beispiel 1

| | | | |
|---|---|---|---|
| 1) | PPG 1000 | 200,00 g | (OHZ=101) |
| 2) | PPG 600 | 50,5 g | (OHZ=50) |
| 3) | Irganox B225 | 1,0 g | (Stabilisator) |
| 4) | IPDI | 105,5 g | (Isophorondiisocyanat) |
| 5) | DBTL | 0,03 g | |
| 6) | BHT | 0,4 g | |
| 7) | 2-Hydroxyethylacrylat | 10,1 g | |
| 8) | aliphat. Alkohol | 8,0 g | (Molekulargewicht 268 g/mol, einwertig) |
| 9) | Irgacure 2959 | 14,2 g | |
| 10) | Dimethylolpropionsäure | 15,0 g | |

### Versuchsdurchführung:

1, 2,3, 10, wurden vorgelegt und auf ca. 120°C aufgeheizt. Anschließend wurde Vakuum angelegt und bei < 10 mbar 1 h entwässert und anschließend mit Stickstoff belüftet. Die Temperatur wurde auf 92°C gesenkt, 4 zugegeben und 10 min homogenisiert. Anschließend wurde 5 zugegeben, die Temperatur erhöht sich. Nach 60 min wird die NCO-Zahl bestimmt (ca. 2,0%). Danach wurde mit trockener Luft belüftet.

6 wurde zugegeben, homogenisiert, dann 7 und bei 100°C gerührt. Nach 30 min. wurden 8 und 9 zugesetzt und nach 1 Std. NCO-Wert und Viskosität bestimmt. Schmelzviskosität 1500 mPas bei 120°C; nach 48 stündiger Lagerung bei 120°C betrug die Viskosität 1850 mPas; NCO = 0,03%.

### Beispiel 3:

### App.: wie in Beispiel 1

| | | | |
|---|---|---|---|
| 1.) | PPG 1000 | 205 g | (OHZ=101) |
| 2) | PPG 600 | 51,0 g | (OHZ = 50) |
| 3) | Irganox B225 | 1,0 g | |
| 4) | IPDI | 110,5 g | (Isophorondiisocyanat) |
| 5) | DBTL | 0,02 g | |
| 6) | BHT | 0,4 g | |
| 7) | 2-Hydroxyethylacrylat | 1,6 g | |
| 8) | aliphat. Alkohol | 2,2 g | (Molekulargewicht 268 g/mol, einwertig) |
| 9) | Irgacure 2959 | 1,2 g | |
| 10) | N-Methyldiethanolam in | 15,5 g | |

### Versuchsdurchführung:

1, 2,3, 10, wurden vorgelegt und auf ca. 120°C aufgeheizt. Anschließend wurde Vakuum angelegt und bei < 10 mbar 1 h entwässert und anschließend mit Stickstoff belüftet. Die Temperatur wurde auf 92°C gesenkt, 4 zugegeben und 10 min homogenisiert. Anschließend wurde 5 zugegeben, die Temperatur erhöht sich. Nach 60 min wird die NCO-Zahl bestimmt (ca. 0,3%). Danach wurde mit trockener Luft belüftet.

6 wurde zugegeben, homogenisiert, dann 7 und bei 100 °C gerührt. Nach 30 min. wurden 8 und 9 zugesetzt und nach 1 Std. NCO-Wert und Viskosität bestimmt. Schmelzviskosität 1600 mPas bei 120 °C; nach 48 stündiger Lagerung bei 120 °C betrug die Viskosität 1850 mPas; NCO = 0,0%.

Eine Folie aus PET (50 µm) wurde mit den Klebstoffen beschichtet und danach bestrahlt (UV-Lampe, Loctite UVALOC 1000, Cure Chamber, UV-I Dosis 90 mJ /cm²).

Die Schichtstärke des Klebstoffs betrug 50 µm.

Die Proben wurden auf feste Prüfkörper aus den angegebenen Substraten geklebt unter definiertem Anrollen. Nach 24 Std. wurde die Probe vermessen.

| Versuch 1 (Vergleich) | V 2 | V 3 | Substrat |
|---|---|---|---|
| 0,8 | 2,0 | 0,9 | Loop tack [ N ] PET mit PET |
| 1900 | > 6950 | >2600 | Shear Festigkeit auf Stahl [min] |
| 6,56 | 18,5 | 13,5 | Peel Test auf Stahl 180° [ N ] |
| 1,2 | 4,5 | 0,9 | Loop tack auf Glas |
| 0,9 | 3,8 | 1,1 | auf PVC |
| 0,04 | 0,11 | 0,09 | auf PTFE |
| 0,4 | 1,3 | 0,6 | auf PS |
| > 2520 | > 4100 | >2580 | Shear Test auf PA6 [ min] |

Es wird der loop tack nach FINAT Test Methode 9 bestimmt.

Es wird die shear-Festigkeit nach FINAT Test Methode 8 bestimmt.

Es wird der peel-Wert 180 ° nach FINAT Test Methode 1 bestimmt.

Es zeigt sich, dass die Verklebungen mit den erfindungsgemäßen Klebstoffen besser sind als ein Vergleichsklebstoff.

## Patentansprüche

1. Durch Strahlung vernetzbare Schmelzklebstoffe, enthaltend mehr als 30 Gew.-% bezogen auf den Schmelzklebstoff mindestens eines Polyurethanpolymeren, das mindestens eine durch Strahlung polymerisierbare reaktive Gruppe enthält, hergestellt durch Umsetzung
a) eines reaktiven PU-Prepolymeren (A) mit zwei oder drei NCO-Gruppen pro Molekül sowie mindestens einer Carboxylgruppe oder eine tertiären Aminogruppe, hergestellt aus
i) einem Gemisch aus mindestens einem di- oder trifunktionellen Polyol ausgewählt aus Polyetherpolyolen oder Polyesterpolyolen mit einem Molekulargewicht zwischen 200 bis 5000 g/mol zusammen mit einer Diolkomponente, die zusätzlich noch eine Carboxylgruppe oder eine tertiäre Aminogruppe aufweist, umgesetzt mit
ii) einem Überschuss mindestens eines Di- oder Triisocyanats mit einer Molekulargewicht unterhalb von 500 g/mol,
b) 20 bis 98 Mol-% mindestens einer niedermolekularen Verbindung (B) enthaltend eine radikalisch polymerisierbare Doppelbindung und eine mit einer NCO-Gruppe reagierender Gruppe, und
c) 0 bis 50 Mol-% mindestens einer Verbindung (C), die mindestens eine gegen NCO-Gruppen reaktive Gruppe aufweist, aber keine unter radikalischen Bedingungen polymerisierbare Gruppe, mit einem Molekulargewicht von 32 bis 5000 g/mol und
d) 2 bis 50 Mol-% mindestens eines radikalischen Photoinitiators (D), der eine primäre oder sekundäre OH-Gruppe aufweist,
wobei die Angaben auf die NCO-Gruppen des PU-Prepolymeren bezogen sind und die Summe aus B, C, D 100 Mol-% ergeben soll,
sowie ggf. weitere Hilfsstoffe.

2. Schmelzklebstoff nach Anspruch 1, **dadurch gekennzeichnet, dass** als Isocyanate (a ii) aliphatische Isocyanate eingesetzt werden.

3. Schmelzklebstoff nach einem der Ansprüche 1 bis 2, **dadurch gekennzeichnet, dass** die niedermolekulare Verbindung B) ein Molekulargewicht unter 1500 g/mol aufweist, insbesondere wobei OH-funktionelle Ester der (Meth)Acrylsäure eingesetzt werden.

4. Schmelzklebstoff nach einem der Ansprüche 1 bis 3, **dadurch gekennzeichnet, dass** als Verbindung (C) 2 bis 35 Mol% mono- oder difunktionelle Alkohole eingesetzt werden.

5. Schmelzklebstoff nach einem der Ansprüche 1 bis 4, **dadurch gekennzeichnet, dass** als Diolkomponente N-Alkyl-di-Alkanolamine oder Dihydroxycarbonsäuren enthalten sind.

6. Schmelzklebstoff nach einem der Ansprüche 1 bis 5, **dadurch gekennzeichnet, dass** 4 bis 40 Mol% radikalische Photoinitiatoren (D) eingesetzt werden, die eine primäre OH-Gruppe aufweisen.

7. Schmelzklebstoff nach einem der Ansprüche 1 bis 6, **dadurch gekennzeichnet, dass** das strahlenvernetzbare PU-Prepolymer 0,05 bis 1 mmol/g COOH-Gruppen oder tert. Aminogruppen enthält.

8. Schmelzklebstoffe nach einem der Ansprüche 1 bis 7, **dadurch gekennzeichnet, dass** zusätzlich 0,1 bis 10 Gew.-% von drei bis sechs-funktionellen (Meth)acrylsäureestern enthalten sind.

9. Schmelzklebstoffe nach einem der Ansprüche 1 bis 8, **dadurch gekennzeichnet, dass** zusätzlich Polymere auf Basis von Polyestern, Polyethern, Polyamiden oder Polyolefinen mit vinylischen Gruppen enthalten sind, die keine Urethangruppen enthalten.

10. Schmelzklebstoff nach einem der Ansprüche 1 bis 9, **dadurch gekennzeichnet, dass** die Viskosität bei Applikationstemperatur von 2000 bis 20000 mPas beträgt, insbesondere gemessen bei 130°C.

11. Verwendung von Schmelzklebstoffen nach einem der Ansprüche 1 bis 10 zur Herstellung von haftklebrigen Klebstoffschichten auf Kunststofffolien.

12. Verwendung nach Anspruch 11 zum Verkleben von Folien aus PE, PP, PVC, Polyester oder Polyamid.

13. Verwendung nach Anspruch 11 zum Verkleben von Foliensubstraten auf mineralischen Untergründen oder auf Kunststoffsubstraten

14. Verwendung nach einem der Ansprüche 11 bis 13, **dadurch gekennzeichnet, dass** der Schmelzklebstoff in einer Schichtdicke bis 500 µm aufgetragen wird.

## Claims

1. Radiation-curable hot-melt adhesives containing more than 30 wt.%, based on the hot-melt adhesive, of at least one polyurethane polymer which contains at least one radiation-polymerizable reactive group, produced by reaction of
a) a reactive PU prepolymer (A) with two or three NCO groups per molecule and at least one carboxyl group or tertiary amino group, produced from
i) a mixture of at least one di- or trifunctional polyol selected from polyether polyols or polyester polyols having a molecular weight of between 200 to 5000 g/mol together with a diol component which additionally has a carboxyl group or tertiary amino group, reacted with
ii) an excess of at least one di- or triisocyanate having a molecular weight of less than 500 g/mol,
b) 20 to 98 mole % of at least one low-molecular-weight compound (B) containing a radically polymerizable double bond and a group which is able to react with an NCO group, and
c) 0 to 50 mole % of at least one compound (C), which has at least one group that is reactive towards NCO groups but no group that can be polymerized under radical conditions, having a molecular weight of 32 to 5000 g/mol, and
d) 2 to 50 mole % of at least one free-radical photoinitiator (D) which has a primary or secondary OH group,
wherein the data are based on the NCO groups of the PU prepolymer and the sum of B, C, D should add up to 100 mole %,
and optionally other auxiliary substances.

2. The hot-melt adhesive according to claim 1, **characterized in that** aliphatic isocyanates are used as isocyanates (a ii).

3. The hot-melt adhesive according to one of claims 1 to 2, **characterized in that** the low-molecular-weight compound B) has a molecular weight below 1500 g/mol, in particular wherein OH-functional esters of (meth)acrylic acid are used.

4. The hot-melt adhesive according to one of claims 1 to 3, **characterized in that** 2 to 35 mole % mono- or difunctional alcohols are used as compound (C).

5. The hot-melt adhesive according to one of claims 1 to 4, **characterized in that** N-alkyldialkanolamines or dihydroxycarboxylic acids are contained as the diol component.

6. The hot-melt adhesive according to one of claims 1 to 5, **characterized in that** 4 to 40 mole % radical photoinitiators (D) which have a primary OH group are used.

7. The hot-melt adhesive according to one of claims 1 to 6, **characterized in that** the radiation-curable PU prepolymer contains 0.05 to 1 mmol/g COOH groups or tertiary amino groups.

8. The hot-melt adhesives according to one of claims 1 to 7, **characterized in that** 0.1 to 10 wt.% of trifunctional to hexafunctional (meth)acrylic acid esters are additionally contained.

9. The hot-melt adhesives according to one of claims 1 to 8, **characterized in that** polymers based on polyesters, polyethers, polyamides or polyolefins with vinylic groups are additionally contained, which do not contain any urethane groups.

10. The hot-melt adhesive according to one of claims 1 to 9, **characterized in that** the viscosity at application temperature is from 2 000 to 20 000 mPas, in particular measured at 130°C.

11. Use of hot-melt adhesives according to one of claims 1 to 10 for the production of pressure-sensitive adhesive layers on plastics films.

12. The use according to claim 11 for the bonding of films of PE, PP, PVC, polyester or polyamide.

13. The use according to claim 11 for the bonding of film substrates onto mineral surfaces or plastics substrates.

14. The use according to one of claims 11 to 13, **characterized in that** the hot-melt adhesive is applied in a coating thickness of up to 500 µm.

## Revendications

1. Adhésifs fusibles réticulables par exposition à un rayonnement, contenant plus de 30 % en poids, rapportés à l'adhésif fusible, d'au moins un polymère de polyuréthane qui contient au moins un groupe réactif polymérisable par exposition à un rayonnement, que l'on prépare par mise en réaction
a) d'un prépolymère PU réactif (A) comprenant deux ou trois groupes NCO par molécule et au moins un groupe carboxyle ou un groupe amino tertiaire, que l'on obtient à partir
i) d'un mélange d'au moins un polyol difonctionnel ou trifonctionnel choisi parmi des polyétherpolyols ou des polyesterpolyols possédant un poids moléculaire entre 200 et 5.000 g/mol conjointement avec un composant de diol, qui présente en outre également un groupe carboxyle ou un groupe amino tertiaire, mis à réagir avec
ii) un excès d'au moins un diisocyanate ou un triisocyanate dont le poids moléculaire est inférieur à 500 g/mol,
b) de 20 à 98 mol % d'au moins un composé à bas poids moléculaire (B) contenant une liaison double polymérisable par voie radicalaire et un groupe qui réagit avec un groupe NCO, et
c) de 0 à 50 mol % d'au moins un composé (C) qui présente au moins un groupe réactif vis-à-vis de groupes NCO, mais aucun groupe polymérisable dans des conditions radicalaires, possédant un poids moléculaire de 32 à 5.000 g/mol, et
d) de 2 à 50 mol % d'au moins un photoinitiateur radicalaire (D) qui présente un groupe OH primaire ou secondaire,
les indications se rapportant aux groupes NCO du prépolymère PU et la somme B, C, D devant s'élever à 100 mol %,
de même que éventuellement d'autres adjuvants.

2. Adhésif fusible selon la revendication 1, **caractérisé en ce qu'**on met en oeuvre, à titre d'isocyanate (a ii), des isocyanates aliphatiques.

3. Adhésif fusible selon l'une quelconque des revendications 1 à 2, **caractérisé en ce que** le composé à bas poids moléculaire (B) présente un poids moléculaire inférieur à 1500 g/mol, en particulier dans lequel on met en oeuvre des esters à fonctionnalité OH de l'acide (méth)acrylique.

4. Adhésif fusible selon l'une quelconque des revendications 1 à 3, **caractérisé en ce qu'**on met en oeuvre, à titre de composé (C), de 2 à 35 mol % d'alcools monofonctionnels ou difonctionnels.

5. Adhésif fusible selon l'une quelconque des revendications 1 à 4, **caractérisé en ce qu'**il contient, à titre de composant de diol, des N-alkyl-dialcanolamines ou des acides dihydroxycarboxyliques.

6. Adhésif fusible selon l'une quelconque des revendications 1 à 5, **caractérisé en ce qu'**on met en oeuvre de 4 à 40 mol % de photoinitiateurs radicalaires (D) qui présentent un groupe OH primaire.

7. Adhésif fusible selon l'une quelconque des revendications 1 à 6, **caractérisé en ce que** le prépolymère PU apte à une réticulation par exposition à un rayonnement contient de 0,05 à 1 mmol/g de groupes COOH ou de groupes amino tertiaires.

8. Adhésifs fusibles selon l'une quelconque des revendications 1 à 7, **caractérisés en ce qu'**ils contiennent en outre de 0,1 à 10 % en poids d'esters trifonctionnels à hexafonctionnels de l'acide (méth)acrylique.

9. Adhésifs fusibles selon l'une quelconque des revendications 1 à 8, **caractérisés en ce qu'**ils contiennent en outre des polymères à base de polyesters, de polyéthers, de polyamides ou de polyoléfines contenant des groupes vinyle, qui ne contiennent pas de groupe uréthane.

10. Adhésif fusible selon l'une quelconque des revendications 1 à 9, **caractérisé en ce que** la viscosité à la température d'application s'élève de 2.000 à 20.000 mPas, mesurée en particulier à 130 °C.

11. Utilisation d'adhésifs fusibles selon l'une quelconque des revendications 1 à 10, pour la production de couches adhésives par contact sur des feuilles en matières synthétiques.

12. Utilisation selon la revendication 11, pour le collage de feuilles en PE, en PP, en PVC, en polyester ou en polyamide.

13. Utilisation selon la revendication 11, pour le collage de substrats en feuilles sur des supports minéraux ou sur des substrats en matières synthétiques.

14. Utilisation selon l'une quelconque des revendications 11 à 13, **caractérisé en ce qu'**on applique l'adhésif fusible avec une épaisseur de couche s'élevant jusqu'à 500 µm.
